# FASCICULE DE BREVET EUROPEEN

(11) **EP 0 490 730 B1**
(45) Date de publication et mention de la délivrance du brevet: **20.09.1995**
(21) Numéro de dépôt: 91403290.9
(22) Date de dépôt: 05.12.1991
(51) Int. Cl.: F16H 61/28, F16H 61/30

(54) **Dispositif de commande motorisé de changement de rapports de transmission pour boîte de vitesses, en particulier pour véhicules automobiles**
Angetriebene Schalteinrichtung zum Schalten der Übersetzung eines Getriebes, insbesondere für Kraftfahrzeuge
Motorised control device for the changing of gear ratio in a gear box, in particular for automotive vehicles

(30) Priorité: 07.12.1990 FR 9015361
(43) Date de publication de la demande: 17.06.1992
(73) Titulaire: VALEO, 75848 Paris Cédex 17 (FR)
(72) Inventeur: Michel, Robert, F-95540 Mery-sur-Oise (FR); Randriazanamparany, Vévé Roland, F-92500 Rueil-Malmaison (FR)
(74) Mandataire: Gamonal, Didier

(56) Documents cités:
- DE-A- 2 331 647
- DE-A- 3 128 266
- FR-A- 1 497 939
- GB-A- 726 227
- US-A- 2 665 593
- US-A- 4 549 449
- US-A- 4 712 640

## Description

La présente invention concerne un dispositif de commande motorisé de changement de rapports de transmission pour boîte de vitesses à rapports étagés et point mort, notamment pour véhicules automobiles, du genre comprenant un premier actionneur, porté par une partie fixe, une timonerie comportant au moins en amont un élément d'entrée relié audit actionneur en étant propre à être entraîné par celui-ci, et en aval un élément de sortie relié à un élément récepteur de mise en action de moyens de passage et/ou de sélection, que présente la boîte de vitesses pour changement des rapports de transmmission. Un tel dispositif est décrit dans le document FR-A-1 497 939 conforme au préambule de la revendication 1. Ce dispositif ne permet pas d'anticiper le changement de rapport et présente une timonerie relativement complexe et sujette aux coincements. Pour cette raison, on a prévu dans le document EP-A-0449739, publié après la date de priorité de la présente demande, un second actionneur porté par une partie fixe en étant associé à l'élément de sortie de la timonerie pour manoeuvre dudit élément de sortie.

Par ailleurs, l'élément récepteur est interposé entre l'élément d'entrée et l'élément de sortie de ladite timonerie.

Dans ce document, le premier actionneur et le deuxième actionneur sont du type électrique, et il est fait appel à des moyens de rampes mobiles pour déplacer l'élément de sortie avec possibilité d'effectuer un mouvement continu en passant par une position correspondant à un point mort de la boîte de vitesses.

Dans une forme de réalisation, le premier actionneur est affecté à l'engagement ou passage des vitesses tandis que le deuxième actionneur est affecté à la sélection de la ligne de vitesses et les moyens de rampes correspondant à la sélection, peuvent être déplacés par le second actionneur avant que l'élément de sortie ne passe par la position correspondant au point mort en traversant et/ou en interceptant lesdits moyens de rampes.

Ainsi il est possible d'anticiper les changements de rapports, en déplaçant par avance les moyens de rampes de préférence avant la mise en route de l'actionneur de passage. L'anticipation peut s'effectuer en temps masqué lors de l'opération de débrayage. En variante, le premier actionneur peut être affecté à la sélection et le second actionneur au passage. En outre l'agencement de la timonerie comporte un élément intermédiaire déformable et doté d'un accumulateur d'énergie.

Dans le document US-A-4 712 640 le levier de changement de vitesses est propre à agir, par l'intermédiaire de premiers moyens de transmission, sur l'élément de sortie d'un premier maître-cylindre hydraulique, lequel est relié à un second maître-cylindre hydraulique agissant par l'intermédiaire de seconds moyens de transmission sur l'élément récepteur de commande de la boîte de vitesses.

Les deux maîtres-cylindres hydrauliques sont portés par une partie fixe et il en résulte qu'il n'y a pas présence d'une timonerie comme dans les deux susmentionnés documents.

Néanmoins, il peut être intéressant d'utiliser des vérins hydrauliques pour commander l'élément récepteur.

La présente invention a pour objet de tirer parti de ces dispositions sans faire appel à des moyens de rampes pour effectuer les changements de rapport de transmission.

Suivant l'invention, un dispositif du type susindiqué, est caractérisé en ce que la timonerie est propre à déplacer en translation et/ou en rotation ledit élément récepteur, ledit élément récepteur étant interposé entre l'élément d'entrée et de sortie de ladite timonerie, en ce que un second actionneur porté par une partie fixe est prévu en étant associé à l'élément de sortie de la timonerie pour manoeuvre dudit élément de sortie, en ce que le premier actionneur est un vérin hydraulique propre à entraîner en rotation l'élément récepteur, en ce que le second actionneur est un vérin hydraulique propre à entraîner en rotation ou translation l'élément de sortie pour déplacement en translation de l'élément récepteur, et en ce que le second actionneur est associé à un élément intermédiaire déformable et doté d'un accumulateur d'énergie, en sorte que pour passage avec sélection des vitesses, ledit actionneur comprime l'accumulateur d'énergie puis, après déplacement de l'élément récepteur, sous l'action du premier actionneur, jusqu'à une position point mort, permet une détente dudit accumulateur d'énergie et un passage avec sélection des vitesses.

Suivant l'invention, un dispositif du type susindiqué, est caractérisé en ce que la timonerie est propre à déplacer en translation et/ou en rotation ledit élément récepteur, ledit élément récepteur étant interposé entre l'élément d'entrée et de sortie de ladite timonerie, en ce que un second actionneur porté par une partie fixe est prévu en étant associé à l'élément de sortie de la timonerie pour manoeuvre dudit élément de sortie, en ce que le premier actionneur est un vérin hydraulique propre à entraîner en translation l'élément récepteur, en ce que le second actionneur est un vérin hydraulique propre à entraîner en rotation l'élément de sortie pour déplacement en rotation de l'élément récepteur, et en ce que le second actionneur est associé à un élément intermédiaire déformable et doté d'un accumulateur d'énergie, en sorte que pour passage avec sélection des vitesses, ledit actionneur comprime l'accumulateur d'énergie puis, après déplacement de l'élément récepteur, sous l'action du premier actionneur, jusqu'à une position point mort, permet une détente dudit accumulateur d'énergie et un passage avec sélection des vitesses.

Grâce à l'invention, la présence des moyens de rampes n'est plus nécessaire, et le passage des vitesses avec sélection se fait aussi sans interruption du mouvement du premier actionneur.

Suivant une autre caractéristique de l'invention, le premier et le second actionneurs sont alimentés par des distributeurs, eux-mêmes alimentés par une vanne à pression contrôlée.

La description qui va suivre illustre l'invention en regard des dessins annexés dans lesquels:
- la figure 1 est une vue schématique en perspective d'une boîte de vitesses équipée du dispositif de commande suivant le document EP-A-0 449 739;
- la figure 2 est une vue identique à la figure 4 du susmentionné document;
- la figure 3 est une vue identique à la figure 5 du susmentionné document;
- la figure 4 est une vue schématique du dispositif de commande selon l'invention;
- la figure 5 est une vue en coupe axiale partielle de l'élément intermédiaire déformable;
- la figure 6 est une vue schématique de la vanne à pression contrôlée.

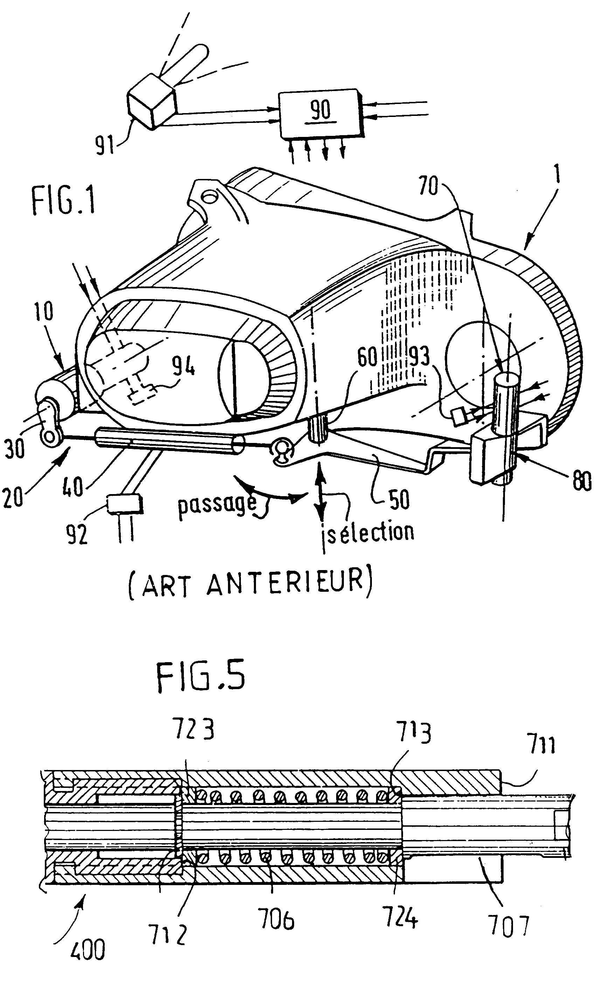

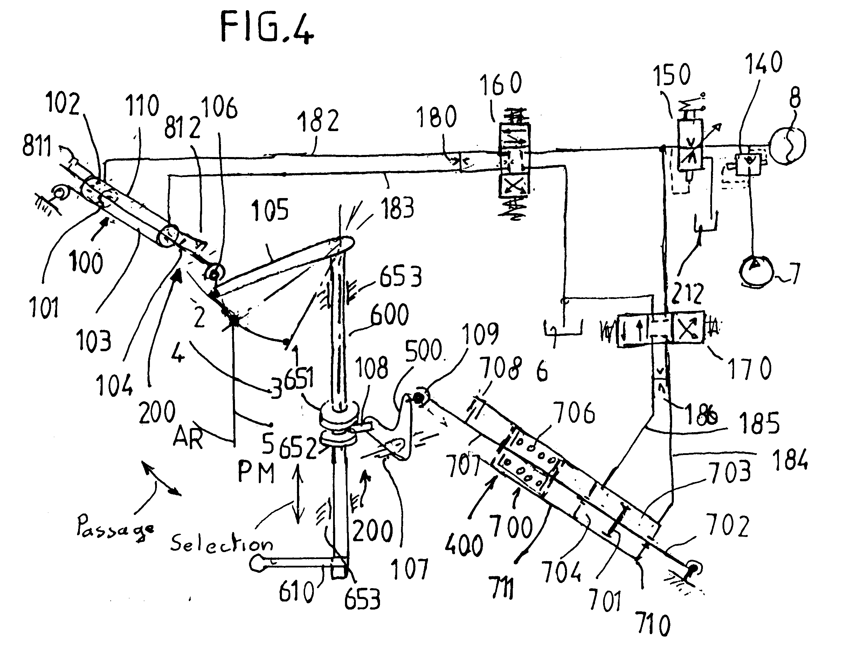

En se reportant à la figure 1, on voit en 1 le contour d'une boîte de vitesses à rapports étagés et point mort pour véhicules automobiles, ladite boîte présentant, de manière connue en soi, des moyens de passage et de sélection pour changement de rapports de transmission. La boîte de vitesses mécanique à pignons avec présence d'ensembles synchroniseur-crabot, tout comme celle de la figure 4, est à cinq vitesses et on a représenté schématiquement à la figure 4 sa grille, sachant que le passage, par exemple, de la première à la deuxième vitesse s'effectue grâce aux moyens de passage, et le changement de niveau de sélection entre, par exemple, la deuxième et la quatrième vitesses, s'effectue grâce aux moyens de sélection, avec une ligne de point mort représentée par la ligne PM.

Le dispositif de commande comporte un premier actionneur 10 à moteur électrique porté par une partie fixe (la boîte de vitesses), une timonerie 20 comportant en amont un élément d'entrée 30 relié audit actionneur 10, en étant propre à être entraîné par celui-ci, et en aval un élément de sortie relié à un élément récepteur 60 de mise en route des moyens de passage et/ou de sélection.

L'élément de sortie est propre lors de son déplacement à intercepter et/ou à traverser des moyens de rampes mobiles par l'intermédiaire d'un support fixe.

Un second actionneur 70 à moteur porté par une partie fixe (la boîte de vitesses) est prévu pour entraîner de manière discrète lesdits moyens de rampes 80 en étant relié à ceux-ci.

Le second actionneur 70 permet de déplacer par avance les moyens de rampes avant la mise en route du premier actionneur. Dans cette figure, le premier actionneur est un actionneur de passage pour passage des vitesses, et le second actionneur un actionneur de sélection pour sélection des vitesses.

L'élément récepteur est un arbre 60 de commande de la boîte de vitesses et comporte au moins un doigt de commande 61 appartenant aux moyens de passage et/ou de sélection. Le doigt 61 est propre à coopérer avec des coulisseaux 63 associés chacun à un ensemble synchroniseur-crabot, lesdits coulisseaux présentant des rainures 64 pour coopération, à jeu X2, avec définition d'une zone de point mort, avec l'extrémité arrondie 62 du doigt 61 pour les positions de point mort, le doigt 61 peut se déplacer en translation (valeur Y2 et selection) d'une rainure 64 à l'autre, tandis que lors du passage de la première à la deuxième vitesse par exemple, le doigt 61 est admis à effectuer une rotation en arc-de-cercle.

Il est prévu en outre des capteurs qui envoient des signaux à un bloc électronique central de calcul et de commande 90 pour piloter lesdits actionneurs. Ce bloc reçoit des informations d'un commutateur 91 à la disposition de l'usager, ledit commutateur 91 remplacant le levier de changement de vitesses manuel et consiste par exemple en un commutateur à commande impulsionnelle permettant d'envoyer des ordres au bloc 90 pour la mise en route des actionneurs 10 et 70.

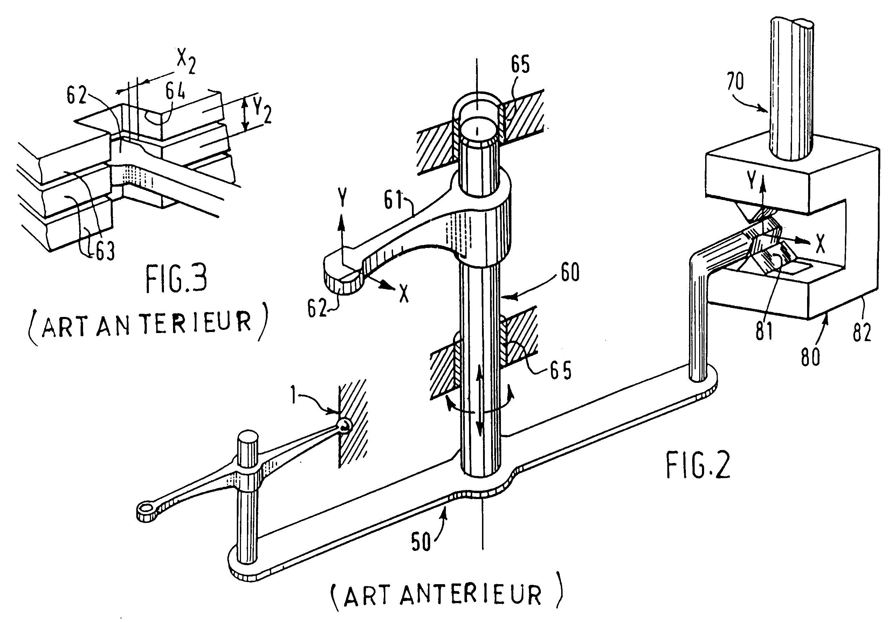

Dans la figure 4, on a référencé les éléments communs à la présente invention et à ceux des figures 1 à 3, en multipliant les références par 10. Ainsi à la figure 4, le dispositif de commande présente un premier actionneur 100 ici pour passage des vitesses, l'élément récepteur portant la référence 600 et étant doté d'un doigt 610 pour attaquer les coulisseaux 63 de la figure 3 de la même manière que le doigt 61 de ladite figure.

Le dispositif présente un second actionneur 700 pour effectuer la sélection des vitesses.

Suivant l'invention, un dispositif du type susindiqué est caractérisé en ce que la timonerie 200 est propre à déplacer en translation et/ou en rotation l'élément récepteur 600 de commande, ledit élément récepteur étant interposé entre l'élément d'entrée 104 et de sortie 500 de ladite timonerie 200, en ce que un second actionneur 700 porté par une partie fixe est prévu en étant associé à l'élément de sortie 500 de la timonerie pour manoeuvre dudit élément de sortie, en ce que le premier actionneur 100 est un vérin hydraulique propre à entraîner en rotation l'élément récepteur 600 pour déplacement de celui-ci, en ce que le second actionneur 700 est un vérin hydraulique propre à entraîner en translation ou rotation l'élément de sortie 500 pour déplacement en translation de l'élément récepteur 600, et en ce que le second actionneur est associé à un élément intermédiaire 400 déformable et doté d'un accumulateur d'énergie 706, en sorte que pour passage avec sélection des vitesses ledit second actionneur 700 comprime l'accumulateur d'énergie 400 puis, après déplacement de l'élément récepteur 600, sous l'action du premier actionneur 100, jusqu'à une position de point mort, permet une détente dudit accumulateur d'énergie et un passage avec sélection des vitesses.

Plus précisément à la figure 4, le premier actionneur consiste en un vérin hydraulique avec un piston 101 monté mobile à l'intérieur d'un cylindre 110 pour définir deux chambres 102,103 propres à être alimentées en fluide hydraulique par deux circuits 182,183 avec une communication entre eux dotés d'une restriction 180. Ces circuits 182,183 sont reliés à un distributeur 160.

Le cylindre 110 est fixe et est relié à une partie fixe du véhicule, tandis que le piston 101 est mobile axialement à l'intérieur du cylindre 110.

Le piston 101 est solidaire d'une tige 104 faisant saillie hors du cylindre 110 et propre à coopérer par une liaison du type à rotule 106, avec un bras 105 solidaire de l'organe récepteur 600. La tige 104 constitue l'élément d'entrée de la timonerie 200 propre à entraîner en rotation l'organe 600 par son bras 105. L'organe récepteur 600 est un arbre de commande de la boîte de vitesses.

L'élément de sortie de la timonerie porte la référence 500 et consiste en un levier commandant par translation la levée ou la déscente de l'arbre de commande 600 de la boîte de vitesses. Ici cette translation correspond à une sélection dans la grille des vitesses, le passage s'opérant par une rotation de l'arbre 600 et l'élément de sortie est monté à articulation par un axe 107 sur un support fixe. Ce levier 500 a une forme en V et présente à l'extrémité de l'une de ses branches un doigt 108 intercalé entre deux épaulements 651,652, que présente l'organe récepteur 600 monté à translation et à rotation par l'intermédiaire de paliers 653. L'autre branche du V est reliée par une liaison à rotule 109 à une tige 707.

Cette tige 707 appartient à l'élément intermédiaire déformable 400. Cet élément intermédiaire déformable 400 est associé au second actionneur 700. Le second actionneur 700 est un vérin hydraulique et comporte un cylindre 710 à l'intérieur duquel est monté un piston 701 doté d'une tige 702 traversant de part en part le cylindre 710. Le piston 701 définit à l'intérieur du cylindre 710 deux chambres 703 et 704.

Contrairement au premier actionneur 100, la tige 702 est fixe en étant reliée à une partie fixe du véhicule, et le cylindre 710 peut se déplacer le long de la tige 702. Ce cylindre 710 est pourvu d'un prolongement 711. Ce prolongement 711 est creux et comporte intérieurement deux épaulements de butée 712,713 écartés axialement l'un de l'autre.

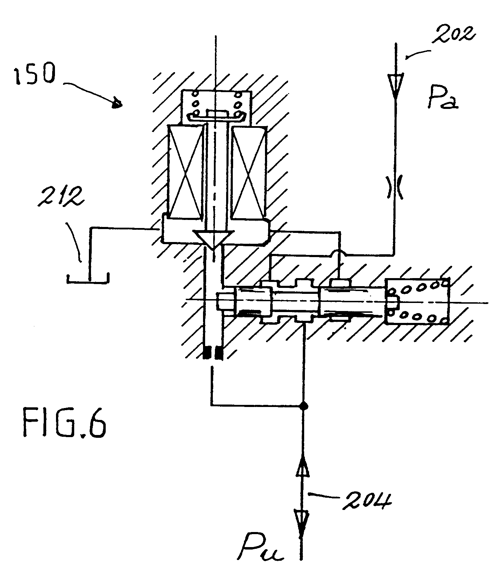

La tige 707, associée à l'élément de sortie 500, avec intervention de la liaison 109, porte deux rondelles 723,724 (figure 5). Ces rondelles sont interposées entre les épaulements 713,712 et entre deux épaulements de la tige 707. L'un desdits épaulements est formé grâce à un changement de diamètre de la tige 707, l'autre grâce à une bague.

On notera, que la tige 707 est immobilisée en rotation par rapport au prolongement 711, par exemple, par une liaison à clavette.

Un moyen élastique 706, ici sous forme de ressort à boudin, est interposé entre les deux rondelles 723,724 montées avec possibilité de translation sur la tige 707 entre les deux épaulements de celle-ci. Ces rondelles 723,724 servent de coupelle d'appui au ressort 706.

Les chambres 703,704 sont reliées par des circuits 184,185, eux-mêmes reliés à un distributeur 170 avec intervention d'une dérivation à restriction 186 entre les deux dits circuits.

Les distributeurs 160,170 sont reliés à un réservoir commun 6 et sont propres à être alimentés par une vanne à pression contrôlée 150, elle-même alimentée à partir d'une pompe 7 venant recharger un accumulateur de pression 8 avec intervention d'une valve 140 dotée d'un clapet anti-retour.

A la tige 104, qui traverse de part en part le cylindre 110, sont associés de part et d'autre du cylindre 110 des capteurs ici à effet Hall 811,812 et de la même manière un capteur ici à effet Hall 708 est associé à la tige 707.

Le dispositif fonctionne de la manière suivante:
- pour effectuer un passage de vitesses, à partir d'ordres provenant du commutateur 91 de la figure 1, et à partir du calculateur 90 conformé en conséquence, on manoeuvre le distributeur 160, ce qui permet d'alimenter à partir de la vanne 150 l'une des chambres 102 ou 103 à travers des circuits 182 ou 183;
- le piston 101 se déplace alors, la chambre 102 se remplissant par exemple, tandis que la chambre 103 se vide, le liquide de celle-ci étant transféré par le circuit 183 au réservoir 6, une restriction de dérivation 180 étant prévue entre les deux circuits. Ainsi la tige 104 se déplace et par exemple effectue le passage de la deuxième vitesse à la première vitesse (figure 1), par déplacement rotatif du bras 105 et rotation de l'organe 600;
- ce mouvement se poursuit jusqu'à ce que le capteur à effet Hall 812 entre en action et détecte un mouvement prédéterminé de la tige 104, ce qui met fin au mouvement de l'actionneur 100. Le passage inverse par exemple de la première à la deuxième vitesse s'effectue en sens inverse, la chambre 103 se remplissant, tandis que la chambre 102 se vide, le mouvement s'arrêtant au bout d'une course prédéterminée de la tige 104 avec intervention du capteur 811. Lors de ce passage, le levier 105 effectue une rotation et passage par la position point mort. Le levier 600 effectue donc un mouvement de rotation.

Pour effectuer un changement de vitesses comprenant une sélection, l'opération s'effectue de la manière suivante:
- a l'aide du distributeur 170 on alimente sous pression à partir de la vanne 150 l'une des chambres 703,704, l'une des chambres se remplissant et l'autre se vidant, ce qui entraîne un mouvement du cylindre 710 dans un sens ou dans l'autre. Au cours de ce mouvement, par exemple, si le cylindre se déplace vers la gauche de la figure 4 (la chambre 704 se remplissant), le ressort 706 est admis à être comprimé par mouvement de la coupelle 723. Le capteur à effet Hall 708 capte cette compression.

Après avoir comprimé le moyen élastique 706 et effectué la présélection (sélection enregistrée), on met en route l'actionneur de passage 100, ce qui entraîne une rotation du levier 105 (et du récepteur 600) et lorsque celui-ci passe par la position point mort, le moyen élastique 706 est admis à se détendre en entraînant la tige 707, et le levier 500 pivote, en sorte qu'il entraîne en translation par son doigt 708 le récepteur 600, par l'intermédiaire de l'un des épaulements 651,652 concernés. Ainsi, grâce à la liaison à rotule 106, l'actionneur 100 permet également un entraînement en translation de l'arbre 600. De même, l'élément de sortie 500 permet une rotation de l'arbre 600 et la rotule 109 un entraînement en rotation et en translation de l'arbre 600.

La sélection de la ligne de vitesses est ainsi effectuée et le mouvement de l'actionneur 100 se poursuit jusqu'à ce qu'il atteigne la position correspondant à une mise en action de la synchronisation des pignons concernés de la boîte de vitesses. Le mouvement est alors arrêté mais l'effort maintenu. Après synchronisation le mouvement se rétablit, le crabotage de la vitesse s'effectue et le capteur 812 détecte la fin-de-course ce qui provoque l'arrêt du mouvement par le rappel de la valve 160 en position centrale. On opère donc la sélection puis le passaage des vitesses.

Pour mémoire, on rappelera que la synchronisation des pignons est effectuée à l'aide de cônes de synchronisation. Tout ceci est connu et ne sera pas décrit plus en détail ici. Pour plus de précision sur l'ensemble synchroniseurs-crabots on se reportera par exemple au document FR-A-2609138, qui montre également des pignons et les arbres de la boîte de vitesses, dont l'arbre d'entrée, ou primaire, est entraîné en rotation par un disque de friction d'un embrayage lié en rotation audit arbre usuellement par une liaison à cannelure.

Ainsi grâce à l'invention le mouvement est continu. Bien entendu le calculateur pilote la mise en route différée des distributeurs 160,170, de même qu'il pilote la vanne de pression contrôlée 150. Les deux distributeurs 160,170 travaillent de la même manière, l'un des circuits alimentant une chambre, tandis que l'autre circuit permet à l'autre chambre de se vider.

A la figure 6, on a représenté schématiquement la vanne 150, celle-ci est une vanne à trois voies, l'une 202 étant reliée à l'accumulateur de pression 8, une autre 204 est reliée à l'utilisation, c'est-à-dire à l'un des distributeurs 160,170, tandis que la troisième est reliée à un réservoir 212.

Cette vanne 150 comporte ici un tiroir soumis à l'action d'un ressort, sollicitant ledit tiroir, pour obturer un passage de communication entre l'utilisation et le réservoir 212, ledit passage étant propre à être obturé par un clapet sousmis à l'action d'un ressort et à l'action d'un solénoïde.

La vanne 150 est du type à battement, et lorsque le solénoïde est alimenté électriquement, il attire le clapet ce qui établit une communication, le clapet quittant son siège.

On notera que le solénoïde reçoit des impulsions et que son temps d'ouverture varie, ce qui permet de faire varier la pression d'utilisation Pu et donc d'alimenter le distributeur 160,170 concerné.

D'une manière générale, cette vanne 150 est une valve commandé électriquement du type proportionnelle normalement fermée.

Bien entendu, la présente invention n'est pas limitée à l'exemple de réalisation décrit.

En particulier, la boîte de vitesses peut avoir une structure inversée, le passage des vitesses s'effectuant par translation de l'arbre 600 et la sélection des vitesses par rotation de l'arbre 600, les coulisseaux 63 étant tournés à 90°.

Par exemple, dans ce cas, l'actionneur 100 entraîne en translation l'arbre 600, sa tige attaque par une rotule un élément en V, comme l'élément 500 de la figure 4, tandis que l'actionneur 700 attaque par une rotule un bras, comme le bras 105 de la figure 4.

Dans ce cas, le premier actionneur entraîne en translation l'élément récepteur tandis que le second actionneur entraîne en rotation l'élément récepteur, le second actionneur étant associé à un élément intermédiaire déformable et doté d'un accumulateur d'énergie.

Enfin, le second actionneur peut entraîner en translation l'élément de sortie de la transmission. Tout cela dépend notamment de la disposition de l'actionneur par rapport à l'arbre de commande 600 et de la conformation de l'élément de sortie. Toutes les combinaisons sont possibles.

## Revendications

1. Dispositif de commande motorisé de changement de rapports de transmission pour boîte de vitesses à rapports étagés et point mort (PM), notamment pour véhicules automobiles, du genre comprenant un premier actionneur (100), porté par une partie fixe, une timonerie (200) comportant au moins en amont un élément d'entrée (104) relié audit actionneur en étant propre à être entraîné par celui-ci, et en aval un élément de sortie (500) relié à un élément récepteur (600) de mise en action de moyens de passage et/ou de sélection, que présente la boîte de vitesses pour changement rapports de transmmission, caractérisé en ce que la timonerie (200) est propre à déplacer en translation et/ou rotation l'élément récepteur (600), ledit élément récepteur (600) étant interposé entre l'élément d'entrée (104) et de sortie (500) de ladite timonerie, en ce qu'un second actionneur (700) porté par une partie fixe est prévu en étant associé à l'élément de sortie (500) de la timonerie (200) pour manoeuvre dudit élément de sortie (500), en ce que le premier actionneur (100) est un vérin hydraulique propre à entraîner en rotation l'élément récepteur (600), en ce que le second actionneur (700) est un vérin hydraulique propre à entraîner en translation ou rotation l'élément de sortie (500) pour déplacement en translation de l'élément récepteur (600), et en ce que le second actionneur (700) est associé à un élément intermédiaire (400) déformable et doté d'un accumulateur d'énergie (706), en sorte que pour passage avec sélection des vitesses ledit second actionneur (700) comprime l'accumulateur d'énergie (400) puis, après déplacement de l'élément récepteur, sous l'action du premier actionneur (100), jusqu'à une position de point mort, permet une détente dudit accumulateur d'énergie et passage avec sélection des vitesses.

2. Dispositif de commande motorisé de changement de rapports de transmission pour boîte de vitesses à rapports étagés et point mort (PM), notamment pour véhicules automobiles, du genre comprenant un premier actionneur (100), porté par une partie fixe, une timonerie (200) comportant au moins en amont un élément d'entrée (500) relié audit actionneur en étant propre à être entraîné par celui-ci, et en aval un élément de sortie (104) relié à un élément récepteur (600) de mise en action de moyens de passage et/ou de sélection, que présente la boîte de vitesses pour changement rapports de transmmission, caractérisé en ce que la timonerie (200) est propre à déplacer en translation et/ou rotation l'élément récepteur (600), ledit élément récepteur (600) étant interposé entre l'élément d'entrée (500) et de sortie (104) de ladite timonerie, en ce qu'un second actionneur (700) porté par une partie fixe est prévu en étant associé à l'élément de sortie (104) de la timonerie (200) pour manoeuvre dudit élément de sortie (104), en ce que le premier actionneur (100) est un vérin hydraulique propre à entraîner en translation l'élément récepteur (600) pour déplacement de celui-ci, en ce que le second actionneur (700) est un vérin hydraulique propre à entraîner en rotation l'élément de sortie (104) pour déplacement en rotation de l'élément récepteur (600), et en ce que le second actionneur (700) est associé à un élément intermédiaire (400) déformable et doté d'un accumulateur d'énergie (706), en sorte que pour passage avec sélection des vitesses ledit second actionneur (700) comprime l'accumulateur d'énergie (400) puis, après déplacement de l'élément récepteur, sous l'action du premier actionneur (100), jusqu'à une position de point mort, permet une détente dudit accumulateur d'énergie et passage avec sélection des vitesses.

3. Dispositif selon la revendication 1 ou 2, caractérisé en ce que le premier (100) et le second (700) actionneurs sont alimentés chacun par un distributeur (respectivement 160,170), lesdits distributeurs étant eux-mêmes alimentés par une vanne à pression contrôlée commune (150).

4. Dispositif selon la revendication 3, caractérisé en ce que ladite vanne (150) comporte un tiroir soumis à l'action d'un ressort pour obturer un passage de communication entre l'un desdits distributeurs (160,170) et un réservoir (212), ledit passage étant propre à être obturé par un clapet sousmis à l'action d'un ressort et à l'action d'un solénoïde, ladite vanne (150) étant du type dit à battements.

5. Dispositif selon l'une quelconque des revendications 1 à 4, caractérisé en ce que le premier et le second actionneurs comportent un piston (101,701) monté à l'intérieur d'un cylindre (110,710) et délimitant deux chambres (102,103-702,703).

6. Dispositif selon la revendication 1 et 5, caractérisé en ce que le cylindre (110) du premier actionneur (100) est fixe, tandis que le cylindre (710) du second actionneur (700) est mobile.

7. Dispositif selon la revendication 6, caractérisé en ce que le piston (101) du premier actionneur (100) est solidaire d'une tige (104) faisant saillie hors du cylindre (110) et propre à coopérer par une liaison du type à rotule (106) avec un bras (105) solidaire de l'organe récepteur (600).

8. Dispositif selon la revendication 6, caractérisé en ce que le second actionneur (700) comporte un prolongement (711) pour emprisonnement d'un moyen élastique (706).

9. Dispositif selon la revendication 8, caractérisé en ce que le moyen élastique (706) est monté entre deux coupelles (703,704) portées par une tige (707) reliée à l'élément de sortie (500) de la timonerie (200) et en ce que la tige (707) appartient à l'élément intermédiaire déformable (400).

10. Dispositif selon la revendication 8 ou 9, caractérisé en ce que l'élément de sortie (500) est un levier en forme de V monté à articulation par un axe (107) sur un support fixe et en ce que le levier (500) a une forme en V et présente à l'extrémité de l'une de ses branches un doigt (108) intercalé entre deux épaulements (651,652) que présente l'organe récepteur (600), tandis que l'extrémité de l'autre branche du V est reliée par une liaison à rotule (109) par un tige (707) appartenant au second actionneur.

## Claims

1. Apparatus for the motorised control of transmission speed ratio changes, for a gearbox having stepped gear ratios and neutral (PM), especially for motor vehicles, being of the kind comprising a first actuator (100), carried by a fixed part, a linkage (200) comprising, at least, on the upstream side, an input element (104) which is coupled to the said actuator and which is adapted to be driven by the latter, and on the downstream side an output element (500) which is coupled to a receiver element (600) for actuating gear shift and/or speed selection means of the gearbox for changing transmission speed ratios, characterised in that the linkage (200) is adapted to displace the receiver element (600) in straight line and/or rotary motion, the said receiver element (600) being interposed between the input element (104) and the output element (500) of the said linkage, in that a second actuator (700), carried by a fixed part, is provided, being associated with the output element (500) of the linkage (200) for manoeuvring the said output element (500), in that the first actuator (100) is a hydraulic jack adapted to drive the receiver element (600) in rotation, in that the second actuator (700) is a hydraulic jack adapted to drive the output element (500) in straight line or rotary motion for displacing the receiver element (600) in a straight line, and in that the second actuator (700) is associated with a deformable intermediate element (400), and has an energy accumulator (706), such that, for a gear shift with selection of the speeds, the said second actuator (700) compresses the energy accumulator (400), and then, after the receiver element has been displaced by the first actuator (100) to a neutral position, disengages the said energy accumulator and effects the gear shift with speed selection.

2. Apparatus for the motorised control of transmission speed ratio changes, for a gearbox having stepped gear ratios and neutral (PM), especially for motor vehicles, being of the kind comprising a first actuator (100), carried by a fixed part, a linkage (200) comprising, at least, on the upstream side, an input element (500) which is coupled to the said actuator and which is adapted to be driven by the latter, and on the downstream side an output element (104) which is coupled to a receiver element (600) for actuating gear shift and/or speed selection means of the gearbox for changing transmission speed ratios, characterised in that the linkage (200) is adapted to displace the receiver element (600) in straight line and/or rotary motion, the said receiver element (600) being interposed between the input element (500) and the output element (104) of the said linkage, in that a second actuator (700), carried by a fixed part, is provided, being associated with the output element (104) of the linkage (200) for manoeuvring the said output element (104), in that the first actuator (100) is a hydraulic jack adapted to drive the receiver element (600) for displacement of the latter, in that the second actuator (700) is a hydraulic jack adapted to drive the output element (104) in rotation for displacing the receiver element (600) in rotation, and in that the second actuator (700) is associated with a deformable intermediate element (400), and has an energy accumulator (706), such that, for a gear shift with selection of the speeds, the said second actuator (700) compresses the energy accumulator (400), and then, after the receiver element has been displaced by the first actuator (100) to a neutral position, disengages the said energy accumulator and effects the gear shift with speed selection.

3. Apparatus according to Claim 1 or Claim 2, characterised in that the first actuator (100) and the second actuator (700) are each fed by a distributor (160, 170 respectively), the said distributors being themselves fed through a common pressure control valve (150).

4. Apparatus according to Claim 3, characterised in that the said valve (150) comprises an axially movable valve member acted on by a spring for obturation of a passage giving communication between one of the said distributors (160, 170) and a reservoir (212), the said passage being arranged to be obturated by an obturating element which is subjected to the action of a spring and to the action of a solenoid, the said valve (150) being of the so-called poppet valve type.

5. Apparatus according to any one of Claims 1 to 4, characterised in that the first and second actuators comprise a piston (101, 701) mounted within a cylinder (110, 710) and defining two chambers (102, 103 - 702, 703).

6. Apparatus according to Claims 1 and 5, characterised in that the cylinder (110) of the first actuator (100) is fixed, while the cylinder (710) of the second actuator (700) is movable.

7. Apparatus according to Claim 6, characterised in that the piston (101) of the first actuator (100) is fixed to a rod (104), projecting out of the cylinder (110) and adapted to cooperate through a ball type coupling (106) with an arm (105) fixed to the receiver member (600).

8. Apparatus according to Claim 6, characterised in that the second actuator (700) includes an extension (711) for enclosing a resilient means (706) therein.

9. Apparatus according to Claim 8, characterised in that the resilient means (706) is mounted between two cup-shaped members (703, 704) carried by a rod (707) which is connected to the output element (500) of the linkage (200), and in that the rod (707) is part of the deformable intermediate element (400).

10. Apparatus according to Claim 8 or Claim 9, characterised in that the output element (500) is a V-shaped lever which is articulated on a fixed support by means of a pivot (107), and in that the lever (500) is V-shaped and has, at the end of one of its branches, a finger (108) which is interposed between two shoulders (651, 652) of the receiver member (600), while the end of the other branch of the V is coupled through a ball-type coupling (109) with a rod (707) of the second actuator.

## Patentansprüche

1. Angetriebene Schalteinrichtung zum Schalten der Übersetzung eines Getriebes mit gestuften Gängen und Leerlaufstellung (PM), insbesondere für Kraftfahrzeuge, bestehend aus einem ersten Betätigungsorgan (100), das auf einem feststehenden Teil angebracht ist, einem Gestänge (200), welches zumindest vorgeschaltet ein Eingangselement (104) umfaßt, das mit dem genannten Betätigungsorgan verbunden ist, wobei es von diesem angetrieben werden kann, und nachgeschaltet ein Ausgangselement (500), das mit einem Aufnahmeelement (600) für die Betätigung von Umschalt- und/oder Gangwahlmitteln verbunden ist, die das Getriebe zum Schalten der Übersetzung aufweist , **dadurch gekennzeichnet,** daß das Gestänge (200) das genannte Aufnahmeelement (600) geradlinig und/oder drehend bewegen kann, wobei das genannte Aufnahmeelement (600) zwischen dem Eingangs- (104) und Ausgangselement (500) des genannten Gestänges eingesetzt ist, daß ein auf einem feststehenden Teil angebrachtes zweites Betätigungsorgan (700) vorgesehen ist, das mit dem Ausgangselement (500) des Gestänges (200) verbunden ist, um das genannte Ausgangselement (500) zu betätigen, daß das erste Betätigungsorgan (100) ein Hydraulikzylinder ist, der das Aufnahmeelement (600) drehend antreiben kann, daß das zweite Betätigungsorgan (700) ein Hydraulikzylinder ist, der das Ausgangselement (500) drehend oder geradlinig antreiben kann, um die geradlinige Bewegung des Aufnahmeelements (600) zu bewirken, und daß das zweite Betätigungsorgan (700) mit einem verformbaren Zwischenelement (400) verbunden ist, das mit einem Energiespeicher (706) versehen ist, so daß für eine Umschaltung mit Gangwahl das genannte zweite Betätigungsorgan (700) den Energiespeicher (400) zusammendrückt und anschließend nach der Bewegung des Aufnahmeelements unter der Einwirkung des ersten Betätigungsorgans (100) bis zu einer Leerlaufstellung eine Entspannung des genannten Energiespeichers sowie eine Umschaltung mit Gangwahl ermöglicht.

2. Angetriebene Schalteinrichtung zum Schalten der Übersetzung eines Getriebes mit gestuften Gängen und Leerlaufstellung (PM), insbesondere für Kraftfahrzeuge, bestehend aus einem ersten Betätigungsorgan (700), das auf einem feststehenden Teil angebracht ist, einem Gestänge (200), welches zumindest vorgeschaltet ein Eingangselement (500) umfaßt, das mit dem genannten Betätigungsorgan verbunden ist, wobei es von diesem angetrieben werden kann, und nachgeschaltet ein Ausgangselement (104), das mit einem Aufnahmeelement (600) für die Betätigung von Umschalt- und/oder Gangwahlmitteln verbunden ist, die das Getriebe zum Schalten der Übersetzung aufweist , **dadurch gekennzeichnet,** daß das Gestänge (200) das genannte Aufnahmeelement (600) geradlinig und/oder drehend bewegen kann, wobei das genannte Aufnahmeelement (600) zwischen dem Eingangs- (500) und Ausgangselement (104) des genannten Gestänges eingesetzt ist, daß ein auf einem feststehenden Teil angebrachtes zweites Betätigungsorgan (100) vorgesehen ist, das mit dem Ausgangselement (104) des Gestänges (200) verbunden ist, um das genannte Ausgangselement (104) zu betätigen, daß das erste Betätigungsorgan (700) ein Hydraulikzylinder ist, der das Aufnahmeelement (600) geradlinig antreiben kann, daß das zweite Betätigungsorgan (100) ein Hydraulikzylinder ist, der das Ausgangselement (104) drehend antreiben kann, um die Drehbewegung des Aufnahmeelements (600) zu bewirken, und daß das zweite Betätigungsorgan (100) mit einem verformbaren Zwischenelement (400) verbunden ist, das mit einem Energiespeicher (706) versehen ist, so daß für eine Umschaltung mit Gangwahl das genannte zweite Betätigungsorgan (100) den Energiespeicher (400) zusammendrückt und anschließend nach der Bewegung des Aufnahmeelements unter der Einwirkung des ersten Betätigungsorgans (700) bis zu einer Leerlaufstellung eine Entspannung des genannten Energiespeichers sowie eine Umschaltung mit Gangwahl ermöglicht.

3. Einrichtung nach Anspruch 1 oder 2 , **dadurch gekennzeichnet,** daß das erste (100) und das zweite Betätigungsorgan (700) jeweils durch ein Steuerventil (160 bzw. 170) angesteuert werden, wobei diese Steuerventile wiederum durch ein gemeinsames Druckkontrollventil (150) angesteuert werden.

4. Einrichtung nach Anspruch 3 **, dadurch gekennzeichnet,** daß das genannte Ventil (150) einen Schieber umfaßt, auf den eine Feder einwirkt, um einen Verbindungsdurchgang zwischen einem der gennanten Steuerventile (160, 170) und einem Behälter (212) zu verschließen, wobei der genannte Durchgang durch eine Klappe verschlossen werden kann, die durch eine Feder beaufschlagt wird und auf die eine Magnetspule einwirkt, wobei es sich bei dem genannten Ventil (150) um ein Schlagventil handelt.

5. Einrichtung nach einem der Ansprüche 1 bis 4 , **dadurch gekennzeichnet,** daß das erste und das zweite Betätigungsorgan einen Kolben (101, 701) umfassen, der im Innern eines Zylinders (110, 710) geführt ist und zwei Kammern (102, 103-702, 703) begrenzt.

6. Einrichtung nach Anspruch 1 und 5 , **dadurch gekennzeichnet,** daß der Zylinder (110) des ersten Betätigungsorgans (100) feststehend ausgeführt ist, während der Zylinder (710) des Zweiten Betätigungsorgans (700) beweglich ist.

7. Einrichtung nach Anspruch 6 , **dadurch gekennzeichnet,** daß der Kolben (101) des ersten Betätigungsorgans (100) fest mit einer Spindel (104) verbunden ist, die aus dem Zylinder (110) heraus vorsteht und über eine Kugelgelenkverbindung (106) mit einem Arm (105) Zusammenwirken kann, der fest mit dem Aufnahmeorgan (600) verbunden ist.

8. Einrichtung nach Anspruch 6 , **dadurch gekennzeichnet,** daß das zweite Betätigungsorgan (700) eine Verlängerung (711) zur Umschließung eines elastischen Mittels (706) umfaßt.

9. Einrichtung nach Anspruch 8 , **dadurch gekennzeichnet,** daß das elastische Mittel (706) zwischen zwei Tellern (703, 704) angebracht wird, die sich auf einer Spindel (707) befinden, welche mit dem Ausgangselement (500) des Gestänges (200) verbunden ist, und daß die Spindel (707) zu dem verformbaren Zwischenelement (400) gehört.

10. Einrichtung nach Anspruch 8 oder 9 , **dadurch gekennzeichnet,** daß das Ausgangselement (500) ein V-förmiger Hebel ist, der über eine Achse (107) gelenkig auf einer festen Auflage gelagert ist, und daß der Hebel (500) eine V-Form besitzt und am Ende eines seiner Schenkel einen Finger (108) aufweist, der zwischen zwei Schultern (651, 652) eingesetzt ist, die das Aufnahmeorgan (600) aufweist, während der andere Schenkel des V ist über eine Kugelgelenkverbindung (109) mit einer Spindel (707) verbunden ist, die zu dem zweiten Betätigungsorgan gehört.
